Europäisches Patentamt

European Patent Office

Office européen des brevets

(19)

(11) Veröffentlichungsnummer: **0 413 677 A1**

## (12) EUROPÄISCHE PATENTANMELDUNG

(21) Anmeldenummer: 90890215.8

(22) Anmeldetag: 18.07.90

(51) Int. Cl.5: **F16D 3/72**

(30) Priorität: 17.08.89 AT 1953/89

(43) Veröffentlichungstag der Anmeldung:
20.02.91 Patentblatt 91/08

(84) Benannte Vertragsstaaten:
DE FR GB

(71) Anmelder: DR. ING. GEISLINGER & CO.
SCHWINGUNGSTECHNIK GESELLSCHAFT
M.B.H.
Mayrwies-Esch 340
A-5023 Salzburg(AT)

(72) Erfinder: Pfeifer, Peter Dipl.-Ing.
Borromäumstrasse 20
A-5020 Salzburg(AT)

(74) Vertreter: Hübscher, Heiner, Dipl.-Ing. et al
Patentanwälte Dipl.-Ing. Gerhard Hübscher,
Dipl.-Ing. Helmut Hübscher Dipl.-Ing. Heiner
Hübscher Spittelwiese 7
A-4020 Linz(AT)

(54) Zwischenglied zum Einbau in eine drehmomentübertragende Antriebsverbindung.

(57) Ein Zwischenglied (1) zum Einbau in eine dreh-momentübertragende Antriebsverbindung weist einen rohrförmigen Mittelteil (2a) und stirnseitige Anschlußteile (2b) auf.

Um bei einfachem Aufbau eine hohe schalldämmende Wirkung zu erreichen, bilden Mittel- und Anschlußteile (2a, 2b) einen einstückigen faserverstärkten Kunststoffkörper (2), dessen Fasern (3) etwa entlang der unter Drehmomentbelastung auftretenden Zug- und Druckspannungslinien durchgehend von Außenrand (4) zu Außenrand (4) der Anschlußteile (2b) verlaufen.

FIG.1

EP 0 413 677 A1

## ZWISCHENGLIED ZUM EINBAU IN EINE DREHMOMENTÜBERTRAGENDE ANTRIEBSVERBINDUNG

Die Erfindung bezieht sich auf ein Zwischenglied zum Einbau in eine drehmomentübertragende Antriebsverbindung, mit einem rohrförmigen Mittelteil und stirnseitigen Anschlußteilen.

Solche Zwischenglieder dienen meist als drehmomentübertragendes Verbindungselement zwischen den beiden Hälften einer Kupplung, sie lassen sich aber unmittelbar selbst auch als Wellenteil in einen Transmissionsstrang einer Antriebsverbindung einsetzen. Bisher sind diese Zwischenglieder durchwegs aus Metall gefertigt, wobei die Verbindungsflansche bildenden Anschlußteile und das Mittelrohr einstückig hergestellt oder auch aus mehreren Teilen zusammengebaut sein können. Es entstehen starre Zwischenglieder, die sich auch nur zur Verbindung einwandfrei fluchtender Wellen eignen. Abgesehen davon, gibt es für Ausgleichskupplungen auch schon Zwischenglieder, die als Anschlußteile mit dem rohrförmigen Mittelteil verschweißte Membranscheiben aufweisen. Werden diese Membranscheiben im Bereich des Außenumfanges mit den zugehörigen Kupplungshälften verbunden, bleibt deren Biegeelastizität erhalten und durch diese Verformbarkeit des Zwischengliedes lassen sich Wellenverlagerungen gut ausgleichen. Allerdings sind diese Aus gleichskupplungen mit den membranbestückten Zwischengliedern recht aufwendig und teuer und sie sind wie die anderen metallenen Zwischenglieder nicht in der Lage, schalldämmend zu wirken und die Weiterleitung von Körperschall in stärkerem Ausmaß zu beeinträchtigen.

Der Erfindung liegt daher die Aufgabe zugrunde, diese Mängel zu beseitigen und ein Zwischenglied der eingangs geschilderten Art zu schaffen, das sich bei einfachem Aufbau vor allem durch seine schalldämmenden Eigenschaften auszeichnet.

Die Erfindung löst diese Aufgabe dadurch, daß Mittel- und Anschlußteile einen einstückigen faserverstärkten Kunststoffkörper bilden, dessen Fasern etwa entlang der unter Drehmomentbelastung auftretenden Zug- und Druckspannungslinien durchgehend von Außenrand zu Außenrand der beiden Anschlußteile verlaufen. Die dämmenden und dämpfenden Eigenschaften eines Kunststoffkörpers haben sich bereits mehrfach bewährt und durch den speziellen Verlauf durchgehender Fasern gibt es auch keinerlei Schwierigkeiten hinsichtlich der Belastungsfähigkeit bei der Drehmomentübertragung. Die Verstärkungsfasern für den Kunststoffkörper werden durch eine Drehmomentbelastung ausschließlich auf Zug oder Druck belastet und übernehmen voll die tragende Funktion, während der Kunststoff, in dem die Fasern eingebettet sind, für die gewünschte Schall- oder Schwingungsdämpfung sorgt. Der einstückige Kunststoffkörper ist darüber hinaus leicht an Gewicht, vermeidet jegliche kritische Stelle einer Schweißung od. dgl. zwischen Anschluß- und Mittelteil und läßt sich den jeweiligen konstruktiven Gegebenheiten von vornherein während seiner Herstellung optimal anpassen. Diese Kunststoffkörper können als eigenständige Wellenteile od.dgl. Konstruktionselemente genauso wie als Verbindungsglieder von Kupplungen usw. eingesetzt werden und bringen auf rationellste Weise eine hochwirksame Schalldämmung für die gegebene Antriebsverbindung mit sich. Solche schalldämmenden Elemente sind vor allem im Schiffsbau von großer Bedeutung, wo sie als Wellenteil oder als Teil einer Kupplung in den Antriebsstrang zwischen Antriebsmotor und Schiffsschraube eingebunden werden können.

Je nach Belastung und Größe der zu Übertragenden Drehmomente kann der Kunststoffkörper ein oder mehrere übereinandergeschichtete Faserlagen aufweisen, so daß die Tragfähigkeit der Zwischenglieder praktisch beliebig zu steigern ist.

Nach einer besonders vorteilhaften Ausgestaltung der Erfindung ist der Kunststoffkörper aus schlauchförmigen Prepregs hergestellt, was eine besonders rationelle Fertigung erlaubt. Unter Prepregs werden vorimprägnierte Fasergeflechte od.dgl. verstanden, die mit einem entsprechenden Anteil Reaktionsharzmasse imprägniert sind und ohne weitere Zusätze zum gewünschten Zeitpunkt unter Wärme aushärten. Werden nun solche Prepregs in Schlauchform vorgefertigt, können diese Prepregschläuche in die gewünschte Form gebracht und dann ausgehärtet werden, wobei je nach Festigkeitseigenschaften der Kunststoffkörper ein oder mehrere Prepregschläuche in- bzw. übereinander anzuordnen sind.

An und für sich können die Anschlußteile beliebig ausgestaltet und durch ihre Form, beispielsweise eine Kegelstumpfform, an die vorgesehene Verbindung mit den zugehörigen Kupplungsteilen, Wellenteilen u.dgl. angepaßt sein, womit aber auch eine gewisse Steifheit des Anschlusses gegeben ist. Soll der Kunststoffkörper in eine Ausgleichskupplung eingesetzt werden oder auf andere Weise einen Ausgleich von Wellenverlagerungen od.dgl. ermöglichen, sind nach einer vorteilhaften Ausgestaltung der Erfindung als Anschlußteile achsnormale Flanschscheiben vorgesehen, wobei die Fasern in den Scheiben etwa tangential an den Mittelteil heranführen und dann entlang einer Übergangskrümmung aus der Scheibenebene heraus in die schraubenlinienförmigen Windungen des Mittelteiles übergehen. Diese Flanschscheiben sind quer zu ihrer Ebene elastisch verformbar und eignen sich daher so wie Metallmembrane bestens für den Ausgleich gegeneinander versetzter Wellen u.dgl. Dabei bleibt selbstverständlich die schalldämmende Wirkung und vor allem auch die Belastungsfähigkeit voll erhalten und auch der Anschluß der Flanschscheiben an andere Konstruktionselemente bereitet wenig Schwierigkeiten, wobei durchaus Klemm- und Klebeverbindungen verwendbar sind.

In der Zeichnung ist der Erfindungsgegenstand beispielsweise veranschaulicht, und zwar zeigen

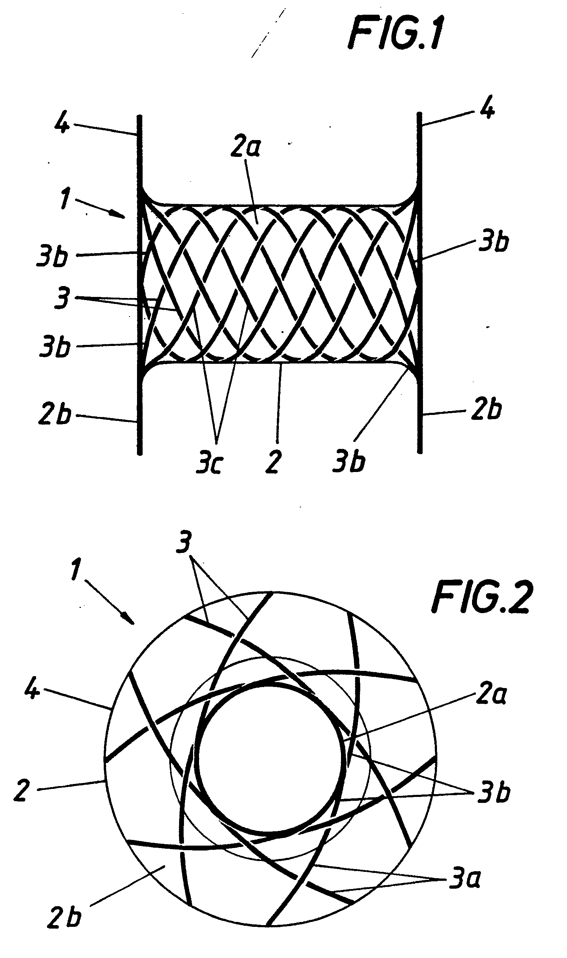

Fig. 1 und 2 ein erfindungsgemäßes Zwischenglied rein schematisch in Seiten- und Stirnansicht.

Ein schall- und schwingungsdämpfendes Zwischenglied 1, insbesondere zum Einbau in eine nicht weiter dargestellte Ausgleichskupplung, besteht aus einem einstückigen faserverstärkten Kunststoffkörper 2, der einen rohrförmigen Mittelteil 2a und stirnseitige achsnormale Flanschscheiben 2b bildet. Die Verstärkungsfasern 3, von denen nur einige wenige angedeutet sind, ergeben insgesamt ein schlauchartiges Geflecht, wobei jede einzelne Faser 3 von Außenrand 4 zu Außenrand 4 der Flanschscheiben 2b durchgehen und entsprechend der bei Drehmomentbelastung auftretenden Zug- und Druckspannungslinien in den Flanschscheiben 2b entlang von Endabschnitten 3a etwa tagential an den Mittelteil 2a heranführen und dann nach einer Übergangskrümmung 3b in schraubenlinienförmige Windungen 3c im Mittelteil übergehen. Es entsteht ein hochbelastbares Zwischenglied 1 zur Drehmomentübertragung, das hohe schall- und schwingungsdämpfende Eigenschaften besitzt und darüber hinaus durch die elastische Verformbarkeit der Flanschscheiben 2b auch einen weitgehenden Ausgleich einer Wellenverlagerung im Zuge der Antriebsverbindung ermöglicht.

**Ansprüche**

1. Zwischenglied (1) zum Einbau in eine drehmomentübertragende Antriebsverbindung, mit einem rohrförmigen Mittelteil (2a) und stirnseitigen Anschlußteilen (2b), dadurch gekennzeichnet, daß Mittel und Anschlußteile (2a, 2b) einen einstückigen faserverstärkten Kunststoffkörper (2) bilden, dessen Fasern (3) etwa entlang der unter Drehmomentbelastung auftretenden Zug- und Druckspannungslinien durchgehen von Außenrand (4) zu Außenrand (4) der beiden Anschlußteile (2b) verlaufen.

2. Zwischenglied nach Anspruch 1, dadurch gekennzeichnet, daß der Kunststoffkörper (2) wenigstens zwei übereinandergeschichtete Faserlagen aufweist.

3. Zwischenglied nach Anspruch 1 oder 2, dadurch gekennzeichnet, daß der Kunststoffkörper (2) aus schlauchförmigen Prepregs hergestellt ist.

4. Zwischenglied nach einem der Ansprüche 1 bis 3, dadurch gekennzeichnet, daß als Anschlußteile achsnormale Flanschscheiben (2b) vorgesehen sind, wobei die Fasern (3) in den Scheiben etwa tangential (3a) an den Mittelteil (2a) heranführen und dann entlang einer Übergangskrümmung (3b) aus der Scheibenebene heraus in die schraubenlinienförmigen Windungen (3c) des Mittelteiles (2a) übergehen.

## FIG.1

## FIG.2

**Europäisches Patentamt**

# EUROPÄISCHER RECHERCHENBERICHT

Nummer der Anmeldung

**EP 90 89 0215**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 564 538 (S.N.C.) <br> * Seite 2, Zeilen 21-26; Seite 3, Zeilen 21-29; Figur 1 * <br> — — — | 1,2 | F 16 D 3/72 |
| A | | 4 | |
| X | US-A-3 970 495 (ASHTON) <br> * Spalte 4; Figur 2 * <br> — — — | 1,2,4 | |
| A | FR-A-2 582 254 (VOLKSWAGEN) <br> * Das ganze Dokument * <br> — — — | 1,2,3 | |
| A | FR-A-2 080 428 (UNITED AIRCRAFT) <br> * Figur 6 * <br> — — — | 1,2,4 | |
| A | GB-A-2 082 730 (LORD CORP.) <br> * Das ganze Dokument * <br> — — — | 1,2,4 | |
| A | GB-A-2 175 273 (U.T.C.) <br> * Das ganze Dokument * <br> — — — — — | 1 | |

| | RECHERCHIERTE SACHGEBIETE (Int. Cl.5) |
|---|---|
| | F 16 D <br> F 16 C |

Der vorliegende Recherchenbericht wurde für alle Patentansprüche erstellt

| Recherchenort | Abschlußdatum der Recherche | Prüfer |
|---|---|---|
| Den Haag | 09 November 90 | ORTHLIEB CH.E. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument